# EUROPÄISCHE PATENTSCHRIFT

(11) **EP 2 609 699 B1**
(45) Veröffentlichungstag und Bekanntmachung des Hinweises auf die Patenterteilung: **09.07.2014**
(21) Anmeldenummer: 11755292.7
(22) Anmeldetag: 24.08.2011
(51) Int. Cl.: H04H 40/90, H04N 7/20

(54) **GERÄT FÜR EMPFANGSANLAGEN, INSBESONDERE FÜR EINKABELSYSTEME IN GEMEINSCHAFTSEMPFANGSANLAGEN**
DEVICE FOR RECEIVING SYSTEMS, IN PARTICULAR FOR SINGLE-CABLE SYSTEMS IN SHARED RECEIVING SYSTEMS
APPAREIL POUR DES ÉQUIPEMENTS RÉCEPTEURS, EN PARTICULIER POUR DES SYSTÈMES MONOCÂBLES DANS DES ÉQUIPEMENTS RÉCEPTEURS COMMUNAUTAIRES

(30) Priorität: 25.08.2010 IT BZ20100031
(43) Veröffentlichungstag der Anmeldung: 03.07.2013
(73) Patentinhaber: Mantinger, Karl, 39040 Auer (IT)
(72) Erfinder: Mantinger, Karl, 39040 Auer (IT)
(74) Vertreter: Ausserer, Anton
(86) Internationale Anmeldenummer: PCT/EP2011/064548
(87) Internationale Veröffentlichungsnummer: WO 2012/025566

(56) Entgegenhaltungen:
- EP-A1- 1 968 219
- US-A1- 2003 040 270
- US-A1- 2005 177 854
- US-A1- 2006 225 099
- US-A1- 2010 185 759
- US-B1- 7 130 576

## Beschreibung

Die vorliegende Erfindung bezieht sich auf ein Gerät für Empfangsanlagen, insbesondere für Einkabelsysteme in Gemeinschaftsempfangsanlagen.

Aus dem Stand der Technik sind Empfangssysteme wie aus der europäischen Veröffentlichung EP 1 968 219 A1 bekannt. Bei dieser werden die empfangenen Satelliten-Programme mittels eines Frequenzumsetzers (Modulators) in der Kopfstation in ein zugeordnetes Frequenzband (FB1, FB2, FB3, usw.) umgesetzt und in die Einkabel-Leitungsverbindung eingespeist. Die Auswahl des Programms wird empfangsseitig vom Teilnehmer/Verbraucher unter Zuhilfenahme eines abstimmbaren Frequenzumsetzers (Tuner) auf dem jeweilige Frequenzband (FB1, FB2, FB3, usw.) vorgenommen.

Diese Anwendung hat zur Folge, dass für die Vielzahl an empfangbaren Programmen (>2000) in einem herkömmlichen Einkabel-Leitungssystem aufgrund des Systems bzw. der Vielzahl an Frequenzen nicht genügend Platz zur Verfügung steht, die nur in limitierter Form eingespeist werden können.

Die Aufgabe der Erfindung liegt in der Ausführung einer erfindungsgemäßen Einkabel-Antennenanlage, die ermöglicht, sämtliche Kanäle mehrerer Satelliten-, terrestrische, Radio und/oder Videodaten-Kanäle ohne Limitierung über ein Einkabel zu empfangen.

Diese Aufgabe wird durch ein Gerät für Empfangsanlagen, gemäß dem kennzeichnenden Teil des Anspruchs 1 gelöst.

Ein Gerät für Anlagen zum Empfang von TV/Radio, Bild- und Datensignalen oder anderen Signalen wie z.B. digitale Signale (Internet), das mit mindestens einer Antenne verbunden werden kann, die demselben ein Signal überträgt und mittels eines Einkabels mit einem Verbraucher verbunden werden kann,
umfasst für jeden Verbraucher einen Satelliten/terrestrischen Empfänger, wobei der Empfänger am Ausgang einen Kanal sendet, der eindeutig mit einem Frequenzband verbunden ist, und wobei das Frequenzband eindeutig einem Empfänger zugeordnet ist, und wobei das Gerät Mittel umfasst, um auf Distanz den Ausgangskanal aus dem Satelliten/terrestrischen Empfänger an der Kopfstation umzuschalten.

Das Einkabelsystem gemäß der Erfindung kann vor allem im Bereich der Gemeinschaftsantennenanlagen an Wohngebäuden bzw. Hotelanlagen mit Einkabelsystemen eingesetzt werden.

Dies hat den Vorteil, dass bei einer bereits vorhandenen Einkabelleitung keine Änderungen an der Kabelstruktur vorgenommen werden muss, um sämtliche eingehende analoge/digitale bzw. TV-Radio-Programme zu empfangen, was die Installationszeiten und Kosten auf ein Minimum reduziert und gleichzeitig ein flexibles System für zukünftige Anpassungen und Änderungen garantiert.

Die Kopfstation ist derart ausgebildet, dass sämtliche SAT, terrestrische sowie Radioprogramme ohne Einschränkung ausgewählt und in ein schon vorhandenes Einkabel-Netz über einen dem Verbraucher fest zugeordneten Frequenzkanal eingespeist werden können.

Die einzige Limitierung besteht in der Anzahl der Teilnehmer, die durch die zu Verfügung stehenden Frequenzbänder bzw. Kanäle begrenzt ist.

Das Einkabel-System ist so zusammengesetzt, dass die Umschaltung sämtlicher eingehender SAT/Terrestrischen bzw. Radio-Programme und Datenpakete bereits an der Kopfstation mittels Receiver, auf die eine koordinierte Fernsteuerung/Fernbedienung mit Adresszuweisung einwirkt, erfolgt. Dabei wird nur das jeweilige selektierte Programm mittels eines Modulators auf eine fest zugeordnete Trägerfrequenz analoger/digitaler Art aufmoduliert und für das dazugehörige TV-Gerät in die Einkabel-Leitungsverbindung eingespeist.

Die einzelnen Kombi-Receiver an der Kopfstelle werden über Multischalter herkömmlicher Art versorgt und haben die Aufgabe, zwischen allen empfangbaren SAT-Programmen vorzugsweise den Satelliten, die Position H/V und den Kanal unter allen empfangbare Satelliten- sowie auch terrestrischen Programmen und den Bild/Audiosignalen auszuwählen. Die Programmumschaltung erfolgt dabei über eine kodierte Funksteuerung, welche eindeutig jedem TV-Gerät und den dazugehörigen Receiver (combo receiver) in der Kopfstation zugeordnet werden kann. In einer weitern Ausführungsform kann der Befehl zum Umschalten des Signals über das Einkabel mittels eines Signals erfolgen, das von einem Umschaltgerät abgegeben wird, das zwischen der Vorrichtung des Teilnehmers und dem Einkabel zwischengeschalten ist, das auf die Kopfstation einwirkt.

Jeder Teilnehmer kann über die Fernsteuerung das Signal an die Kopfstation senden, wo der zugeordnete Satelliten/terrestrische Empfänger (combo-receiver) oder andere Empfänger angeordnet sind, mittels eines Signals, das direkt dem Empfänger gesendet wird oder mittels des Einkabels oder anderen, bekannten Systemen(BUS, EIB/KNX), mittels denen es möglich ist, das gewünschte Programm auszuwählen oder andere Einstellungen zu ändern (z.B. Ton, Farbe usw.).

Sobald das Programm ausgewählt und das Signal der Kopfstation abgegeben wurde, wird das gewählte Programm mittels eines Frequenzmodulators in ein zugeordnetes Frequenzband umgewandelt und über einen Mischer in das Einkabel eingespeist. Die Frequenzabstimmvorrichtung (Tuner) des zugeordneten Teilnehmers die starr auf dasselbe Frequenzband eingestellt ist, wird dabei nicht verändert.

Für z.B. zehn Teilnehmer sind nur zehn Frequenzbänder (Kanäle) analoger/digitaler Art im Einkabel notwendig, um alle Programme mit herkömmlichen digital/analogen Vorrichtungen empfangen zu können.

Seitens der Kopfstation, die die Programme empfängt und der eine Programmumschaltung befohlen wird, ist entweder ein Empfänger für das drahtlose Signal des Teilnehmers, sobald er das Programm ändern möchte oder ein Empfänger für das Signal mittels des Einkabels oder eine andere Verbindung, wie z.B. mittels einer Telefonleitung und ein Empfänger für die Änderungen in der Kopfstation, die die Satelliten, terrestrischen Programme und Video/Audiosignale und Daten jeweils über Funk empfängt. Es wäre daher nicht mehr ein Satelliten/terrestrischer Empfänger (combo-receiver) erforderlich, der zwischen dem Einkabel und der Vorrichtung des Teilnehmers oder innerhalb der Vorrichtung des Teilnehmers zwischengeschaltet ist und es ist nicht mehr ein einstellbares Abstimmgerät (Tuner) notwendig, das in der Vorrichtung des Teilnehmers integriert ist.

Unter zur Verfügungsstellung von einfachen Audio/Video Demodulatoren, die die Aufgabe erfüllen, das zugeordnete Signal an der Steckdose auszuwählen und an die entsprechenden Empfangsvorrichtung anzupassen, ist auch die Verwendung von einfachen Bildschirmen, Monitor, TV Gerät bis hin zu einem Gerät mit hoher Qualität wie zum Beispiel ein HD TV Gerät gegeben.

Die digitale Einspeisung des DVB-T "Digital Video Broadcasting Terrestrial" Signals in das herkömmliche Frequenzband ermöglicht die Grenze der Teilnehmer zu vervielfachen, da mehrere Teilnehmer pro Kanal integriert werden können und somit sämtliche Kanäle für mehr als zweihundert Teilnehmer zur Verfügung stellt.

Sollte ein Teilnehmer einen weiteren Kanal Fernsehen/Radio, Video und Daten bei der Kopfstation anfordern, muss ganz einfach ein neuer Satellit/terrestrischer Empfänger (combo-receiver) oder Datenempfänger hinzugefügt werden, dem ein Frequenzband zugeordnet wird. Dies erlaubt dann den Empfang des Signals für den Teilnehmer auch an einer und derselben Steckdose, an der das erste Signal empfangen wird. Dies ermöglicht die Vision eines Kanals, beispielsweise am Monitor und die gleichzeitige Aufnahme eines weiteren Kanals auf einer Aufnahmevorrichtung, z.B. eine HD (hard disk).

Die Umschaltung des Kanals erfolgt an der Kopfstation. Die Kanaländerung kann mittels eines drahtlosen Signals direkt an der Kopfstation mittels einer Fernsteuerung oder mittels eines Rücksignals über das Einkabel oder eine bekannte Verbindung, wie z.B. eine herkömmliche Telefonleitung erfolgen.

Die Merkmale und die Einzelheiten dieses Einkabelsystems gehen aus den Patentansprüchen und aus der folgenden Beschreibung eines bevorzugten, in der beigefügten Zeichnung dargestellten Ausführungsbeispiels hervor. Es zeigen
- Figur 1: eine detaillierte, schematisch dargestellte Anlage gemäß der Erfindung, und

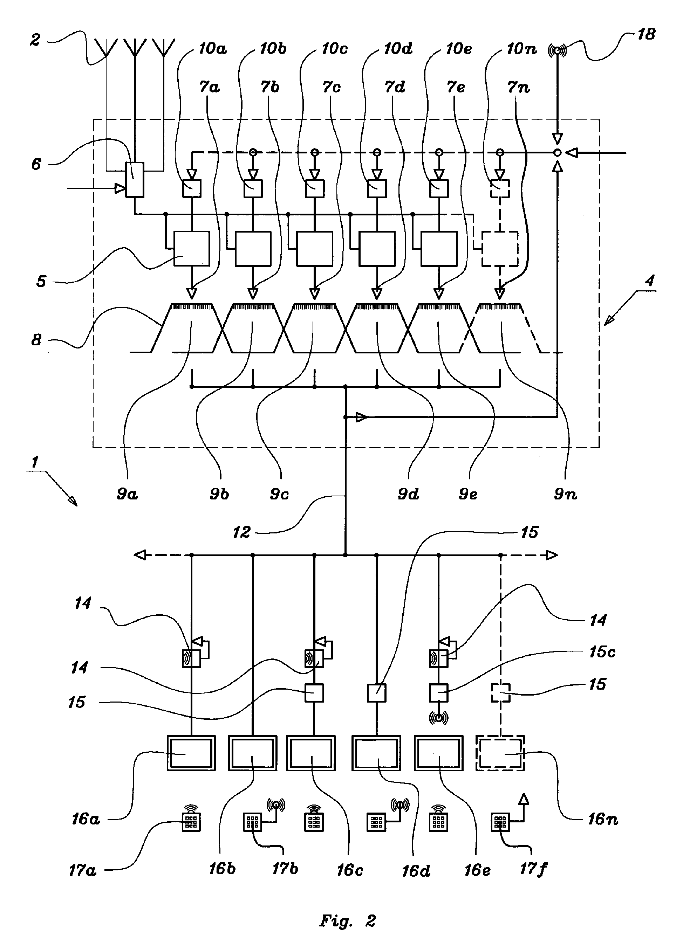

- Figur 2: ein Blockschema einer erfindungsgemäßen Anlage unter Zuordnung eines Signals am Ausgang aus dem erfindungsgemäßen Gerät mit einem Frequenzband und den Modus des Sendens des Befehls für die Umschaltung der Programme.

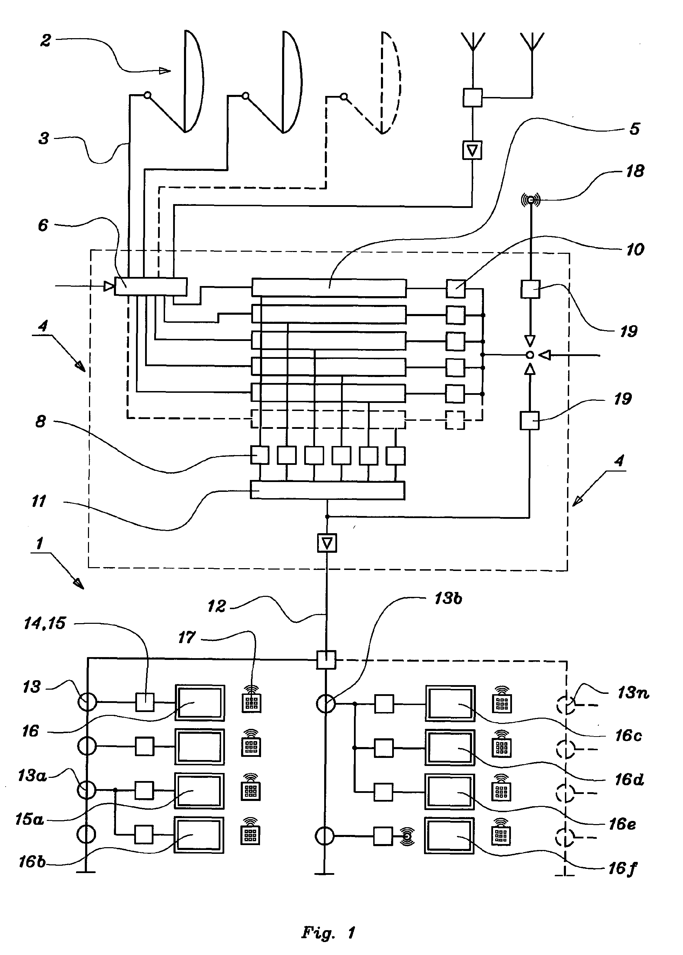

In Figur 1 ist eine schematische Anlage 1 für den Empfang und die Verwendung eines TV/Radio und Bild/Daten-Signal dargestellt. Diese Anlage umfasst mindestens eine Antenne 2, die mittels eines Verbindungskabels 3 mit einem Kopfgerät 4 verbunden ist. Dieses Kopfgerät führt zum Empfang von TV/Radio- und Bilddaten-Signalen ist mittels eines Einkabels 12 mit einem Verbraucher 16 verbunden. Das Kopfgerät 4 umfasst für jeden Verbraucher 16 einen Satelliten/terrestrischen Empfänger (combo-receiver) oder Datenempfänger 5, der mit einem Multischalter (multiswitch) 6 für die Verwaltung der Auswahl der Antennen 2 und der entsprechenden Polarisierung des Eingangssignals verbunden ist. Dieser Satelliten/terrestrische Empfänger (combo-receiver) oder Datenempfänger 5 sendet am Ausgang einen Kanal 7a, 7b..., der eindeutig einem Frequenzband 9a, 9b... zugeordnet ist. Dieses Frequenzband 9a, 9b... ist über Frequenzmodulatoren 8 eindeutig einem Verbraucher 16a, 16b... zugeordnet und das Gerät 4 umfasst Mittel 10a, 10b, 10c..., die imstande sind auf Distanz den Ausgangskanal aus dem Satelliten/terrestrischen Empfänger (combo-receiver) oder Datenempfänger 5 umzuschalten.

Angeschlossen an einer Steckdose 13a, 13b... des Einkabels 12 können mehrere Verbraucher 16a, 15b... wie z.B. ein Fernseher, ein Aufnahmegerät in Serie verbunden sein, die zwei verschiedene Frequenzbänder 9 beim Einkabel 12 beanspruchen.

Um den Ausgangskanal aus dem Satelliten/terrestrischen Empfänger (combo-receiver) oder Datenempfänger 5 umzuschalten, wird ein Signal diesem z.B. durch Fernsteuerung 17 oder mittels eines Signals zugesandt, das über ein Umschaltgerät 14 durch den Einkabel 12 oder durch eine herkömmliche Kabelverbindung übertragen wird, wie z.B. über eine feste Leitung (BUS), über das Stromnetz, über eine herkömmliche Telefonleitung oder über ein kabelloses Signal 18. Jedes an die Kopfstation 4 zugesandte Signal ist eindeutig einem Verbraucher 16 zugeordnet.

Diese erfindungsgemäße Anlage erlaubt eine Kontrolle und eine erleichterte und zentralisierte Programmierung, die beispielsweise von einem PC an der Rezeption eines Hotels verwaltet werden kann.

Diese Anlage umfasst ein erfindungsgemäßes Gerät, das mindestens eine mit dem Gerät zur Übertragung eines Signals verbundene Antenne 18, einen Einkabel 12 zur Verbindung des Gerätes mit mindestens einem Verbraucher und eine Fernsteuerung 17 zum Umschalten des Ausgangskanals des Gerätes und eine mit dem Einkabel 12 verbundene Steckdose 13 aufweist. In einer bevorzugten Ausführungsform ist eine Abstimmungs- und Verwandlungsvorrichtung 15 um das dem Kanal des Einkabels 12 zugeordnete Signal abzustimmen und am Ausgang der Steckdose 13 in ein Signal umzuwandeln, das für den Verbraucher geeignet ist, zwischen der Steckdose 13 und dem Verbraucher 16 zwischengeschalten. Diese Verbindung zwischen der Abstimmungs- und Umwandlungsvorrichtung 15 und dem Verbraucher 16 kann drahtlos erfolgen. In einer weiteren Ausführungsform des Verbrauchergeräts 16b sind sämtliche Elemente wie das Umschaltgerät 14 und die Signalabstimmungs- und Umwandlungsvorrichtung 15 integriert.

Außerdem kann das Verbrauchergerät 16 auch als Anzeige für die Einstellungen und Steuerung der Kopfstation oder anderer angeschlossener Systeme fungieren. Es könnte zum Beispiel die Klimaanlage oder die Rollladensteuerung angeschlossen sein und die Einstellungen angezeigt werden und über die Funksteuerung oder über die anderen Steuerelemente kommandiert werden.

### Aufstellung der Bezugsziffern

- 1: Anlagenschema
- 2: Antenne
- 3: Verbindungskabel
- 4: Gerät, Kopfstation
- 5: Satelliten/terrestrischer Empfänger (combo-receiver) oder Datenempfänger
- 6: Vielfachwähler (multiswitch)
- 7a, 7b, 7c, 7d, 7e, 7n: Ausgangskanal
- 8: Frequenzmodulator
- 9a, 9b, 9c, 9d, 9e, 9n: Frequenzbänder
- 10 10a, 10b, 10c, 10d, 10e, 10n: Mittel für Fernsteuerung
- 11: Signalmischer (Kombinierer)
- 12: Einkabel
- 13, 13a, 13b: Steckdose
- 14: Umschaltgerät
- 15: Signalabstimmungs- und Umwandlungsvorrichtung
- 16, 16a, 16b, 16c, 16d, 16e, 16n: Verbraucher
- 17, 17a, 17b, 17f: Fernsteuerung
- 18: Empfangsantenne

## Patentansprüche

1. Gerät (4) für Anlagen zum Empfang von TV/Radio, Bild- und Datensignalen, das mit mindestens einer Antenne (2) verbunden werden kann, die demselben ein Signal überträgt und mittels eines Einkabels (12) mit einem Verbraucher (16, 16a, 16b, 16c, 16d, 16e, 16n) verbunden werden kann, **dadurch gekennzeichnet, dass** das Gerät (4) für jeden Verbraucher (16, 16a, 16b, 16c, 16d, 16e, 16n) einen Satelliten/terrestrischen Empfänger (5) umfasst, wobei der Empfänger (5) am Ausgang einen Kanal (7a, 7b, 7c, 7d, 7e, 7n) sendet, der eindeutig mit einem Frequenzband (9a, 9b, 9c, 9d, 9e, 9n) verbunden ist und wobei das Frequenzband (9a, 9b, 9c, 9d, 9e,9n) eindeutig einem Verbraucher (16, 16a, 16b, 16c, 16d, 16e) zugeordnet ist, und wobei das Gerät (4) Mittel (17) umfasst, um auf Distanz den Ausgangskanal (7a, 7b, 7c, 7d, 7e, 7n) aus dem Satelliten/terrestrischen Empfänger (5) umzuschalten.

2. Gerät (4) nach Anspruch 1, **dadurch gekennzeichnet, dass** mehrere Verbraucher (16, 16a, 16b, 16c, 16d, 16e, 16n) mittels des Einkabels (12) und einer Steckdose (13) in Serie verbunden werden können.

3. Gerät (4) nach Anspruch 1, **dadurch gekennzeichnet, dass** die Mittel (17) zum Umschalten auf Distanz des Ausgangskanals kabellose Mittel sind.

4. Gerät (4) nach Anspruch 1, **dadurch gekennzeichnet, dass** die Mittel (17) zum Umschalten auf Distanz des Ausgangskanals (7a, 7b, 7c, 7d, 7e, 7n) mittels eines Umschaltgeräts (14) über das Einkabel (12) einschreiten.

5. Gerät (4) nach Anspruch 1, **dadurch gekennzeichnet, dass** die Mittel (17) zum Umschalten auf Distanz des Ausgangskanals (7a, 7b, 7c, 7d, 7e, 7n) mittels einer bekannten Verbindung wie beispielsweise über eine Verbindung mit fixer Leitung (BUS), über ein Stromnetz oder über eine Telefonleitung einschreiten.

6. Anlage (1), umfassend ein Gerät (4) gemäß einem der vorstehenden Ansprüche, **dadurch gekennzeichnet**, das sie mindestens eine Antenne (2), die mit dem Gerät zur Übertragung eines Signals verbunden ist, ein Einkabel (12) zur Verbindung des Gerätes (4) mit mindestens einem Verbraucher und eine Fernsteuerung (17) umfasst, die den Ausgangskanal (7a, 7b, 7c, 7d, 7e, 7n) des Gerätes (4) und eine mit dem Einkabel (12) verbundene Steckdose umschalten kann.

7. Anlage nach Anspruch 6, **dadurch gekennzeichnet, dass** eine Signalabstimmungs- und Umwandlungsvorrichtung (15) zum Umwandeln des im Kanal des Einkabels am Ausgang der Steckdose (13) zugeordneten Signals zwischen der Steckdose (13) und dem Verbraucher (16, 16a, 16b, 16c, 16d, 16e, 16n) zwischengeschaltet ist.

8. Anlage nach Anspruch 6, **dadurch gekennzeichnet, dass** die Abstimmungsvorrichtung (15c) die an der Steckdose (13) angeschlossen ist, das Ausgangssignal drahtlos dem Verbraucher (16, 16a, 16b, 16c, 16d, 16e, 16n) sendet.

9. Anlage nach Anspruch 1, **dadurch gekennzeichnet, dass** das Umschaltgerät (14) und die Signalabstimmungs- und Umwandlungsvorrichtung (15) im Verbraucher (16) integriert sind.

10. Anlage nach Anspruch 1, **dadurch**
**gekennzeichnet, dass** der Verbraucher (16) die Steuerelemente und/oder die Einstellungen der angeschlossenen Systeme visuell darstellt.

11. Anlage nach Anspruch 10, **dadurch**
**gekennzeichnet, dass** die Steuerung der dargestellten Systeme über die Steuerelemente der Anlage erfolgt.

## Claims

1. Equipment (4) for TV/radio video signal and data deception systems adapted to be connected to at least one aerial (2), which transmits a signal to it, and to be connected by means of a single cable (12) to a user (16, 16a, 16b, 16c, 16d, 16e, 16n), **characterised in that** said equipment (4) comprises a satellite/terrestrial receiver for each user (16, 16a, 16b, 16c, 16d, 16e, 16n), said receiver (5) sending out a channel (7a, 7b, 7c, 7e, 7n) associated exclusively with a frequency band (9a, 9b, 9c, 9d, 9e, 9n) and said frequency band (9a, 9b, 9c, 9d, 9e, 9n) being associated exclusively with a user (16, 16a, 16b, 16c, 16d, 16e, 16n) and said equipment (4) comprising means adapted (17) to remotely change said outgoing channel (7a, 7b, 7c, 7d, 7e, 7n) from the satellite/terrestrial receiver (5).

2. Equipment (4) according to claim 1, **characterised in that** multiple users (16, 16a, 16b, 1 6
c , 1 6 d , 16e, 16n) can be connected by means of the single cable (12) and a plug (13) in series.

3. Equipment (4) according to claim 1, **characterised in that** the means (17) for remotely changing said outgoing channel are wireless.

4. Equipment (4) according to claim 1, **characterised in that** the means (17) for remotely changing said outgoing channel (7a, 7b, 7c, 7d, 7e, 7n) are operated by means of a switching device (14) through the single cable (12).

5. Equipment (4) according to claim 1, **characterised in that** the means (17) for remotely changing said outgoing channel (7a, 7b, 7c, 7d, 7e, 7n) are operated by means of a known connection such as, for example, by means of a land line connection (BUS), through the electrical mains or through a telephone line.

6. System (1) comprising equipment (4) according to one of the previous claims, **characterized in that** it comprises at least one aerial (2) connected to said equipment adapted to transmit a signal, a single cable (12) adapted to connect said equipment (4) with at least one user and remote control (17) adapted to change the outgoing channel (7a, 7b, 7c, 7d, 7e, 7n) on said equipment (4) and a plug (13) connected to said single cable (12).

7. System according to claim 6, **characterised in that** a device for tuning and transforming signals (15) adapted to transform the signal associated with said channel of the single cable to the plug output (13) is positioned between the plug (13) and the user (16, 16a, 16b, 16c, 16d, 16e, 16n).

8. System according to claim 6, **characterised in that** the tuning device (15c) connected to the plug (13) transmits the outgoing signal wirelessly to the user (16, 16a, 16b, 16c, 16d, 16e, 16n).

9. System according to claim 1, **characterized in that** the switching device (14) and the device for tuning and transforming signals (15) are integrated with the user (16).

10. System according to claim 1, **characterized in that** the user (16) visually represents the control elements and/or the parameters of the connected system.

11. System according to clam 10, **characterized in that** the control of the connected system occurs by means of the control elements of the system.

## Revendications

1. Un appareil (4) pour équipements pour la réception de signaux TV/radio et de données qui peut être connecté à au moins une antenne (2), qui transmet un signal, et qui peut être connecté au moyen d'un monocâble (12) à un utilisateur (16, 16a, 16b, 16c, 16d, 16e, 16n),
**caractérisé en ce que** l'appareil (4) comprend pour
chaque utilisateur (16, 16a, 16b, 16c, 16d, 16e, 16n) un récepteur satellite/terrestre (5), émettant à la sortie un canal (7a, 7b, 7c, 7d, 7e, 7n) relié par liaison univoque à une bande de fréquence (9a, 9b, 9c, 9d, 9e, 9n) et la bande de fréquence (9a, 9b, 9c, 9d, 9e, 9n) étant associée par liaison univoque à un utilisateur (16, 16a, 16b, 16c, 16d, 16e), et l'appareil (4) comprenant des moyens (17) pour commuter à distance le canal de sortie (7a, 7b, 7c, 7d, 7e, 7n) depuis le récepteur satellite/terrestre (5).

2. Un appareil (4) selon la revendication 1, **caractérisé en ce que** plus d'un utilisateur (16, 16a, 16b, 16c, 16d, 16e, 16n) peuvent être connectés au moyen du monocâble (12) et d'une prise en série.

3. Un appareil (4) selon la revendication 1, **caractérisé en ce que** les moyens (17) pour commuter à distance le canal de sortie sont moyens sans fil.

4. Un appareil (4) selon la revendication 1, **caractérisé en ce que** les moyens (17) pour commuter distance le canal de sortie (7a, 7b, 7c, 7d, 7e, 7n) interviennent au moyen d'un appareil commutateur (14) par voie du monocâble (12) .

5. Un appareil (4) selon la revendication 1, **caractérisé en ce que** les moyens (17) pour commuter à distance le canal de sortie (7a, 7b, 7c, 7d, 7e, 7n) interviennent au moyen d'une connexion connue comme par exemple par voie d'une connexion à ligne fixe (BUS), par voie du réseau électrique ou par voie d'une ligne téléphonique.

6. Un équipement (1) comprenant un appareil (4) selon l'une des revendications précédentes, **caractérisé en ce qu'**il comprend au moins une antenne (2) connectée à l'appareil qui peut transmettre un signal, un monocâble (12) qui peut connecter l'appareil (4) avec au moins un utilisateur et un télécommande à distance (17) qui peut commuter le canal de sortie (7a, 7b, 7c, 7d, 7e, 7n) de l'appareil (4) et une prise (13) connectée au monocâble (12).

7. Un équipement selon la revendication 6, **caractérisé en ce qu'**un dispositif de syntonisation et transformation du signal (15) qui peut transformer le signal associé au canal du monocâble à la sortie de la prise (13) est positionné entre la prise (13) et l'utilisateur (16, 16a, 16b, 16c, 16d, 16e, 16n).

8. Un équipement selon la revendication 6, **caractérisé en ce que** le dispositif de syntonisation (15c) lié à la prise (13) transmet le signal de sortie sans fil à l'utilisateur (16, 16a, 16b, 16c, 16d, 16e, 16n).

9. Un équipement selon la revendication 1, **caractérisé en ce que** l'appareil commutateur (14) et le dispositif de syntonisation et transformation du signal (15) sont intégrés dans l'utilisateur (16).

10. Un équipement selon la revendication 1, **caractérisé en ce que** l'utilisateur (16) représente visuellement les éléments de contrôle et/ou les paramètres du système connecté.

11. Un équipement selon la revendication 10, **caractérisé en ce que** le contrôle du système connecté a lieu par voie des éléments de contrôle de l'équipement
